# EUROPEAN PATENT SPECIFICATION

(11) **EP 1 114 100 B1**
(45) Date of publication and mention of the grant of the patent: **13.10.2004**
(21) Application number: 99929601.5
(22) Date of filing: 08.07.1999
(51) Int. Cl.: C08L 95/00, C09J 195/00, C09D 195/00, E01C 7/18

(54) **GRANULAR BITUMINOUS COMPOSITION**
GRANULIERTE BITUMINÖSE ZUSAMMENSETZUNG
COMPOSITION BITUMEUSE GRANULAIRE

(30) Priority: 10.07.1998 GB 9814869
(43) Date of publication of application: 11.07.2001
(73) Proprietor: SLP Engineering Limited, Lowestoft NR32 1DE (GB); Eng Seng Construction (PTE) Limited, Singapore 2775 (SG)
(72) Inventor: HOWLETT, Steven, Oderbrecht Oil & Gas Serv. Ltd., Lowestoft NR32 1DE (GB); LOZADA, Benjamin, Eng Seng Construction (Pte) Ltd., Singapore 2775 (SG)
(74) Representative: Gemmell, Peter Alan, Dr.
(86) International application number: PCT/GB1999/002195
(87) International publication number: WO 2000/002962

(56) References cited:
- WO-A-97/24410
- WO-A-99/51677
- FR-A- 2 208 966
- GB-A- 1 494 279
- US-A- 3 783 000

## Description

The present invention relates to a process for manufacturing a granular bituminous composition, notably a bituminous mastic composition for use in coating welded joints of sub-sea pipelines, and to a granular bituminous composition obtainable by the process.

Underwater pipelines are typically laid by an operation which involves welding together on a surface barge, lengths of concrete-coated steel pipes. After the pipes are welded, they are surrounded by a sleeve and filled with a mastic asphalt which is allowed to cool. Mastic asphalt compositions which are particularly suitable for this use are often referred to as "marine mastics".

Before a marine mastic can be used on a barge, it typically needs to be in particulate or granular form and to be processed by heating and stirring before being poured into the sleeve.

### (2) Description of the Prior Art

Granular mastics have been known for a number of years. For example it is known to manufacture a mastic asphalt composition as a block or sheet in accordance with British Patent No. 1 494 279, and to produce granular particles of this composition by crushing the blocks or sheets.

It has been proposed, in International Patent Application No. WO 97/24410, to produce a granular mastic by in a first step mixing a partial volume of bitumen at from 140 to 220°C with aggregate at elevated temperatures and filler, the mixing being effected at a temperature above the softening point of the bitumen to form a bitumen coated product, allowing the bitumen coated product to cool, and followed by mixing the bitumen coated product with further bitumen at from 140 to 220°C, the mixing temperature being allowed to fall below the softening point of the bitumen used.

WO 9951677, at least some of the content of which is prior art by virtue of Article 54(3) EPC, describes a process for making a mastic product by mixing unheated undried aggregate with a water content controlled to be at least 3% by weight of the total composition, adding bitumen at an elevated temperature and subsequently adding unheated filler while mixing, and allowing the mixture to cool.

A problem with known granular mastics is that they tend to clump together when stored, particularly in warm conditions.

We have devised a process for manufacturing a granular mastic composition which has less tendency to clump together.

### SUMMARY OF THE INVENTION

In accordance with one aspect of the present invention there is provided a process for manufacturing a granular mastic compound comprising desired amounts of bitumen, filler and aggregate, the process comprising spraying fluid bitumen onto at least a partial volume of the aggregate and an optional partial volume of filler mixed with the aggregate, the aggregate being moistened with a quantity of water in the range 3 to 10% of the total weight of aggregate, to form a partially coated mix product, followed by mixing the partially coated mix product with the remainder or all of the filler and any remaining aggregate.

The resulting product is a granular mastic which has low tack and resists clumping.

All percentages are given by weight, unless otherwise indicated.

The quantities of aggregate, filler, and bitumen are preferably the same as for a conventional marine mastic material. However, it will be understood that by selecting suitable ingredients and proportions, well known to those skilled in the art, granular mastics may be manufactured for uses other than as marine mastics.

The bitumen may be fluid by virtue of being heated to a suitable temperature. Alternatively, or additionally, the bitumen may be applied as an aqueous emulsion, so that some or all of the water may be added as the aqueous phase of the emulsion. The bitumen emulsion may be added at ambient temperatures. An example of a suitable bitumen emulsion is 60 to 70 Pen grade emulsion. For convenience hereinafter, the invention will be described with reference to the use of a bitumen which is heated to make it fluid and suitable for spraying. However, it is to be understood that the invention is not limited to this embodiment.

In making conventional mastics, aggregate is dried at an elevated temperature prior to use. We have found that moistening the partial volume of aggregate with water reduces loss of fine particles of the aggregate and promotes consistent grading. Without limiting the invention in any way, it is postulated that the presence of water causes the hot bitumen to form globules when it makes contact with the moist aggregate, resulting in a tendency for the aggregate to coat the bitumen rather than for the bitumen to coat the aggregate, resulting in a granular product of relatively low tack.

All of the aggregate may be mixed with the bitumen, or a partial volume may be mixed with the bitumen to form the partially coated mix product. Preferably the volume of aggregate which is used is 70 to 100% of the total volume. For convenience hereinafter, the invention will be described with reference to the use of a partial volume of aggregate in the partially coated mix product, but it is to be understood that the invention is not limited to this embodiment.

Some or all of the water may be inherently present in the aggregate, which need not be dried prior to use. Additionally, or alternatively, water may be added by spraying during or immediately prior to spraying of the bitumen. The water is preferably sprayed at a rate of 5 to 10 litres per second. Preferably the quantity of water moistening the aggregate is 6 to 8% by weight of the partial volume of aggregate.

Water will evaporate during the process, and the final product will typically have less than 6% by weight of water. On storage, the water content may be further reduced by evaporation, but this does not significantly affect the free flowing of the granular product. The presence of water is important during the manufacturing process, but not to the finished product.

The preferred temperature for the bitumen is between 180 and 220°C, to reduce its viscosity for spraying. The temperature range which is used for a particular composition will depend on the bitumen used, and its viscosity at a given temperature. For example, if Bitumen type R85/25 (D2/S) is used, it is preferably pre-heated to 180 to 210°C; if bitumen type R105/35 (D2/HS) is used, it is preferably pre-heated to 190 to 220°C.

Although all of the filler could be added after spraying of the aggregate with the bitumen, a partial volume of filler may be present with the partial volume of aggregate. For convenience, the invention will be described hereinafter with reference to this preferred embodiment, but it is to be understood that the invention is not limited to this embodiment.

Prior to mixing, the aggregate is typically fed to a screen and drying drum, for screening purposes only. There is no need to dry the aggregate, since inherent moisture is beneficial to the process. However, drying could be carried out if desired, so that when water is subsequently added, the relative quantities of aggregate and water are more precisely known. After screening, the aggregate may be stored at different sizes for different applications.

The pre-heated bitumen and the first portion of moist aggregate and filler (for example from about 70 to 90% of the total weight of aggregate and filler) may be mixed in a conventional mixing apparatus, for example a pugmill. The mixing preferably takes place over about 10 to 20 seconds, notably about 15 to 18 seconds. The hot bitumen is preferably sprayed into the mixer at a rate which is about 30% slower than a conventional rate for mixing marine mastics, for example at 3 to 9 litres per second, preferably about 5 to 7 litres per second.

The aggregate may be sufficiently moist because of inherent moisture, or it may be sprayed with water. Preferably it is sprayed with water prior to spraying with bitumen, but it would be possible to spray the water and the bitumen simultaneously. The rate of spraying of the water may be variable. It is preferably about 3 to 12 litres per second, notably about 5 to 10 litres per second.

Immediately after mixing, the partially coated mix has a temperature above 50°C. The remaining aggregate and filler are then added and mixed, preferably when the partial mix product has a temperature in the range 50 to 60°C. The mixing preferably takes place over about 3 to 12 seconds, notably about 5 to 10 seconds.

The filler falls on the moist partially coated mix, and is believed to powder-coat the gaps between the aggregate particles.

After completion of the process, the granular product can be packed in bags for transport or storage.

The final product preferably has approximately the following solids composition:

| | |
|---|---|
| Bitumen | 15-17% |
| Aggregate | 65-79% |
| Filler | 6-18%. |

### DETAILED DESCRIPTION

Embodiments of the invention will now be described, by way of example.

In both examples, the aggregate used was granite, having the following particle size distribution:

| Sieve | % passing |
|---|---|
| 6.3 mm | 100 |
| 4.75 mm | 98 |
| 2.36 mm | 61 |
| 1.20 mm | 34 |
| 600 µm | 16 |
| 300 µm | 6 |
| 150 µm | 2 |
| 75 µm | 1 |

### Example 1

The bitumen used in this example was type R85/25.

The filler was granite, having the following particle size distribution:

| Sieve | % passing |
|---|---|
| 600 µm | 100 |
| 300 µm | 96 |
| 150 µm | 85 |
| 75 µm | 53 |

The aggregate (695 kg) and filler (150 kg) were mixed together at room temperature. 80% of this mixture was added to a pugmill. Water (30 kg) was sprayed onto the mixture, through a pump, at a rate of 5 to 10 litres per second.

To this moist mixture was added the bitumen, by spraying, at a rate of 5 litres per second. Immediately before spraying, the bitumen was maintained at 180 to 210°C.

The resultant mixture was mixed for about 15 to 18 seconds to produce a partially coated mixture, at a temperature above 60°C.

The remaining 20% of the aggregate and filler was then added, and mixed with the partially coated mixture for about 5 to 10 seconds.

The finished product was a free-pouring granular mastic suitable for packing in bags. The size of the granules was up to 16 mm, and they had no noticeable tendency to clump together at room temperature.

### Example 2

The bitumen used in this example was type R105/35.

The filler was lime, having the following particle size distribution:

| Sieve | % passing |
|---|---|
| 150 µm | 100 |
| 75 µm | 90 |

The mastic was prepared by a similar method to that of example 1, except for the following:
the bitumen was heated to 190 to 220°C before spraying;
the bitumen was sprayed at a rate of 7 litres per second; and
45 kg of water was sprayed on the partial volume of aggregate and filler prior to addition of the bitumen.

The finished product was a granular, free-pouring mastic which could be packed into bags for storage or transport. The size of the granules was up to 50 mm, and they had no noticeable tendency to clump together at room temperature.

Larger particles may be tolerated subject to user approval or as otherwise pre-determined by the manufacturer.

## Claims

1. A process for manufacturing a granular mastic compound comprising desired amounts of bitumen, filler and aggregate, the process comprising spraying fluid bitumen onto at least a partial volume of the aggregate and an optional partial volume of filler mixed with the aggregate, the aggregate being moistened with a quantity of water in the range 3 to 10% of the total weight of aggregate, to form a partially coated mix product, followed by mixing the partially coated mix product with the remainder or all of the filler and any remaining aggregate.

2. A process as claimed in claim 1, wherein the volume of aggregate in the partially coated mix product is 70 to 100% of the total.

3. A process as claimed in claim 2, wherein the volume of aggregate in the partially coated mix product is about 80% of the total.

4. A process as claimed in any one of the preceding claims, wherein at least some of the water is added to the aggregate by spraying during or prior to the spraying of the bitumen.

5. A process as claimed in any one of the preceding claims, wherein the fluid bitumen is an aqueous emulsion of bitumen.

6. A process as claimed in any one of claims 1 to 4, wherein the bitumen is at a temperature of 180 to 220°C when sprayed onto the aggregate.

7. A process as claimed in any one of the preceding claims, wherein the bitumen, filler and aggregate are present in the following ranges:
| | |
|---|---|
| bitumen | 15 to 17%; |
| filler | 6 to 18% |
| aggregate | 65 to 79%. |

8. A process as claimed in any one of the preceding claims, wherein the mixing of the bitumen and the aggregate takes place over 10 to 20 seconds.

9. A process as claimed in claim 8, wherein the mixing of the bitumen and the aggregate takes place over 15 to 18 seconds.

10. A process as claimed in any one of the preceding claims, wherein the bitumen is sprayed at a rate of 3 to 9 litres per second.

11. A process as claimed in claim 10, wherein the bitumen is sprayed at a rate of 5 to 7 litres per second.

12. A process as claimed in any one of the preceding claims, wherein mixing of the partially coated mix product with the filler and any remaining aggregate takes place over 3 to 15 seconds.

13. A process as claimed in any one of the preceding claims, wherein mixing of the partially coated mix product with filler and any remaining aggregate takes place over 5 to 10 seconds

14. A process as claimed in any one of the preceding claims, wherein the quantity of water is in the range 6 to 8% by weight of the aggregate.

15. A process as claimed in any one of the preceding claims, wherein a partial volume of aggregate is mixed with an equivalent volume of filler prior to being sprayed with the bitumen.

16. A process as claimed in any one of the preceding claims, wherein the aggregate is moist and at ambient temperature immediately prior to spraying with the bitumen.

17. A process as claimed in claim 6, wherein the partially coated mix product is at a temperature in the range 50 to 60°C immediately prior to mixing with the filler and any remaining aggregate.

## Revendications

1. Procédé pour la fabrication d'un composé mastique granulaire comprenant des quantités souhaitées de bitume, de matière de charge et d'agrégat, le procédé comprenant la pulvérisation du bitume fluide sur au moins un volume partiel de l'agrégat et un volume partiel optionnel de matière de charge mélangé avec l'agrégat, l'agrégat étant mouillé avec une quantité d'eau allant de 3 à 10% du poids total de l'agrégat, pour former un produit de mélange partiellement revêtu, suivi du mélange du produit de mélange partiellement revêtu avec le reste ou la totalité de la matière de charge et tout agrégat restant.

2. Procédé selon la revendication 1, dans lequel le volume d'agrégat dans le produit de mélange partiellement revêtu est 70 à 100% du total.

3. Procédé selon la revendication 2, dans lequel le volume d'agrégat dans le produit de mélange partiellement revêtu est d'environ 80% du total.

4. Procédé selon l'une quelconque des revendications précédentes, dans lequel au moins une partie de l'eau est ajoutée à l'agrégat par pulvérisation pendant ou avant la pulvérisation du bitume.

5. Procédé selon l'une quelconque des revendications précédentes, dans lequel le bitume fluide est une émulsion aqueuse de bitume.

6. Procédé selon l'une quelconque des revendications 1 à 4, dans lequel le bitume est à une température de 180 à 220°C lorsqu'il est pulvérisé sur l'agrégat.

7. Procédé selon l'une quelconque des revendications précédentes, dans lequel le bitume, la matière de charge et l'agrégat sont présents dans les proportions suivantes :
bitume : 15 à 17% ;
matière de charge : 6 à 18%
agrégat : 65 à 79%.

8. Procédé selon l'une quelconque des revendications précédentes, dans lequel le mélange de bitume et d'agrégat s'effectue pendant 10 à 20 secondes.

9. Procédé selon la revendication 8, dans lequel le mélange de bitume et d'agrégat s'effectue pendant 15 à 18 secondes.

10. Procédé selon l'une quelconque des revendications précédentes, dans lequel le bitume est pulvérisé à un débit de 3 à 9 litres par seconde.

11. Procédé selon la revendication 10, dans lequel le bitume est pulvérisé à un débit de 5 à 7 litres par seconde.

12. Procédé selon l'une quelconque des revendications précédentes, dans lequel le mélange du produit de mélange partiellement revêtu avec la matière de charge et tout agrégat restant, s'effectue pendant 3 à 15 secondes.

13. Procédé selon l'une quelconque des revendications précédentes, dans lequel le mélange du produit partiellement revêtu avec la matière de charge et tout agrégat restant, s'effectue pendant 5 à 10 secondes.

14. Procédé selon l'une quelconque des revendications précédentes, dans lequel la quantité d'eau se situe dans la plage de 6 à 8% en poids de l'agrégat.

15. Procédé selon l'une quelconque des revendications précédentes, dans lequel un volume partiel d'agrégat est mélangé avec un volume équivalent de matière de charge avant d'être pulvérisé avec le bitume.

16. Procédé selon l'une quelconque des revendications précédentes, dans lequel l'agrégat est humide et à température ambiante immédiatement avant la pulvérisation avec le bitume.

17. Procédé selon la revendication 6, dans lequel le produit de mélange partiellement revêtu est à une température de 50 à 60 °C immédiatement avant le mélange avec la matière de charge et tout agrégat restant.

## Patentansprüche

1. Verfahren zur Herstellung einer granulären Mastixmasse, die gewünschte Mengen Bitumen, Füllstoff und Aggregat umfasst, wobei das Verfahren das Sprühen von flüssigem Bitumen auf mindestens einen Teil des Volumens an Aggregat und gegebenenfalls auf einen Teil des Volumens an Füllstoff, der mit dem Aggregat gemischt ist, umfasst, wobei das Aggregat mit einer Menge Wasser im Bereich von 3 bis 10 % des Gesamtgewichts des Aggregats angefeuchtet wird, unter Bildung eines teilweise beschichteten Mischprodukts, gefolgt von Mischen des teilweise beschichteten Mischprodukts mit dem verbleibenden oder dem gesamten Füllstoff und jeglichem verbleibenden Aggregat.

2. Verfahren nach Anspruch 1, wobei das Volumen an Aggregat in dem teilweise beschichteten Mischprodukt 70 bis 100 % des Gesamten beträgt.

3. Verfahren nach Anspruch 2, wobei das Volumen an Aggregat in dem teilweise beschichteten Mischprodukt etwa 80 % des Gesamten beträgt.

4. Verfahren nach einem der vorhergehenden Ansprüche, wobei mindestens ein Teil des Wassers zu dem Aggregat durch Sprühen während oder vor dem Sprühen des Bitumens hinzugegeben wird.

5. Verfahren nach einem der vorhergehenden Ansprüche, wobei das flüssige Bitumen in Form einer wässrigen Bitumenemulsion vorliegt.

6. Verfahren nach einem der Ansprüche 1 bis 4, wobei das Bitumen beim Sprühen auf das Aggregat eine Temperatur von 180 bis 220 °C besitzt.

7. Verfahren nach einem der vorhergehenden Ansprüche, wobei Bitumen, Füllstoff und Aggregat in den folgenden Bereichen vorliegen:
| | |
|---|---|
| Bitumen | 15 bis 17 %, |
| Füllstoff | 6 bis 18 %, |
| Aggregat | 65 bis 79 %. |

8. Verfahren nach einem der vorhergehenden Ansprüche, wobei das Mischen des Bitumens und des Aggregats innerhalb von 10 bis 20 Sekunden stattfindet.

9. Verfahren nach Anspruch 8, wobei das Mischen des Bitumens und des Aggregats innerhalb von 15 bis 18 Sekunden stattfindet.

10. Verfahren nach einem der vorhergehenden Ansprüche, wobei das Bitumen mit einer Rate von 3 bis 9 Litern pro Sekunde gesprüht wird.

11. Verfahren nach Anspruch 10, wobei das Bitumen mit einer Rate von 5 bis 7 Litern pro Sekunde gesprüht wird.

12. Verfahren nach einem der vorhergehenden Ansprüche, wobei das Mischen des teilweise beschichteten Mischprodukts mit dem Füllstoff und jeglichem verbleibenden Aggregat innerhalb von 3 bis 15 Sekunden stattfindet.

13. Verfahren nach einem der vorhergehenden Ansprüche, wobei das Mischen des teilweise beschichteten Mischprodukts mit dem Füllstoff und jeglichem verbleibenden Aggregat innerhalb von 5 bis 10 Sekunden stattfindet.

14. Verfahren nach einem der vorhergehenden Ansprüche, wobei die Menge Wasser im Bereich von 6 bis 8 %, bezogen auf das Gewicht des Aggregats, liegt.

15. Verfahren nach einem der vorhergehenden Ansprüche, wobei ein Teil des Volumens an Aggregat mit einem äquivalenten Volumen an Füllstoff gemischt wird, bevor es mit dem Bitumen besprüht wird.

16. Verfahren nach einem der vorhergehenden Ansprüche, wobei das Aggregat unmittelbar vor dem Besprühen mit dem Bitumen feucht ist und Umgebungstemperatur aufweist.

17. Verfahren nach Anspruch 6, wobei das teilweise beschichtete Mischprodukt unmittelbar vor dem Mischen mit dem Füllstoff und jeglichem verbleibenden Aggregat eine Temperatur im Bereich von 50 bis 60 °C aufweist.
